# EUROPÄISCHE PATENTSCHRIFT

(11) **EP 3 566 922 B1**
(45) Veröffentlichungstag und Bekanntmachung des Hinweises auf die Patenterteilung: **01.02.2023**
(21) Anmeldenummer: 19164808.8
(22) Anmeldetag: 25.03.2019
(51) Int. Cl.: B60W 50/00, B60W 40/101, B60L 15/20, B60W 30/16, B60W 40/13

(54) **VERFAHREN ZUR ERMITTLUNG EINER PRÄDIZIERTEN BESCHLEUNIGUNGSINFORMATION IN EINEM ELEKTROKRAFTFAHRZEUG UND ELEKTROKRAFTFAHRZEUG**
METHOD FOR DETERMINING PREDICTED ACCELERATION INFORMATION IN AN ELECTRIC CAR AND ELECTRIC CAR
PROCÉDÉ DE DÉTERMINATION DES INFORMATIONS D'ACCÉLÉRATION PRÉVUES DANS UN VÉHICULE AUTOMOBILE ÉLECTRIQUE ET VÉHICULE AUTOMOBILE ÉLECTRIQUE

(30) Priorität: 07.05.2018 DE 102018207006
(43) Veröffentlichungstag der Anmeldung: 13.11.2019
(73) Patentinhaber: Audi AG, 85045 Ingolstadt (DE)
(72) Erfinder: Schönhuber, Christian, 85051 Ingolstadt (DE); Knöferl, Johann, 86529 Schrobenhausen (DE)

(56) Entgegenhaltungen:
- EP-A2- 2 055 597
- DE-A1-102008 015 567
- DE-A1-102013 110 346
- DE-A1-102014 012 318
- DE-A1-102014 224 758
- DE-A1-102016 123 648
- DE-A1-102016 209 848

## Beschreibung

Die Erfindung betrifft ein Verfahren zur Ermittlung einer prädizierten Beschleunigungsinformation, die ein zukünftiges Beschleunigungspotential eines Elektrokraftfahrzeugs mit einem von einer Batterie gespeicherten Elektromotor als Antriebseinrichtung beschreibt, in dem Elektrokraftfahrzeug, sowie ein Elektrokraftfahrzeug.

Elektrokraftfahrzeuge, die ausschließlich wenigstens einen Elektromotor als Antriebseinrichtung aufweisen, welcher von einer Batterie als elektrischer Energiespeicher gespeist wird, sind aufgrund ihres geringen Schadstoffausstoßes und weiterer Vorteile ein wichtiges Forschungsgebiet. Auch für solche Elektrokraftfahrzeuge wurden verschiedene Fahrerassistenzsysteme, die den Fahrer bei der Fahrt unterstützen sollen, vorgeschlagen. Beispiele für derartige Fahrerassistenzsysteme umfassen Längsführungssysteme, insbesondere ACC-Systeme (Adaptive Cruise Control) und Geschwindigkeitsregelanlagen. Für derartige Fahrerassistenzsysteme, aber auch für andere Fahrzeugsysteme, kann eine Information darüber nützlich sein, welches Beschleunigungspotential in dem Kraftfahrzeug zukünftig zur Verfügung steht, so dass entsprechende prädiktive Beschleunigungsinformationen erzeugt und an das entsprechende Fahrzeugsystem, insbesondere Fahrerassistenzsystem, weitergegeben werden können. Basierend auf einer solchen Beschleunigungsinformation können Betriebsparameter des Fahrzeugsystems angepasst werden, insbesondere eine zukünftige Betriebsstrategie und/oder einstellbare Geschwindigkeiten, insbesondere Maximalgeschwindigkeiten. So ist es beispielsweise bei Längsführungssystemen denkbar, den Betrieb relativ zu einem voranfahrenden Verkehrsteilnehmer und/oder die Umstellung auf neue Höchstgeschwindigkeiten abhängig von dem vorhandenen Beschleunigungspotential des Elektrokraftfahrzeugs zu wählen.

Problematisch hierbei ist, dass bei Elektrokraftfahrzeugen auch außerhalb von Fehlerzuständen eine Vielzahl an Einflüssen besteht, durch die ein aktuell verfügbares Beschleunigungspotential von einem Nenn-Beschleunigungspotential, das der maximalen Leistungsfähigkeit des Elek-trokraftfahrzeugs entsprechen kann, abweichen kann. Wird nun lediglich von Nennwerten in einer Beschleunigungsinformation ausgegangen, kann dies bei Fahrzeugsystemen, insbesondere Fahrerassistenzsystemen, zu nicht vorhersehbaren und stark streuenden Fahrverhalten dieser Fahrerassistenzsysteme führen. Beispielsweise können eingestellte Setzgeschwindigkeiten, beispielsweise eine Wunschgeschwindigkeit und/oder eine neue maximal erlaubte Höchstgeschwindigkeit, von Fahrerassistenzsystemen unterschiedlich schnell eingeregelt oder überhaupt nicht erreicht werden. Ein weiterer Aspekt, der eine verbesserte vorausschauende Planung zweckmäßig erscheinen lässt, ist, dass durch eine vorausschauende Fahrweise/Betriebsstrategie Energien eingespart werden können, so dass insbesondere bei Elektrokraftfahrzeugen auch eine Reichweitenerhöhung erfolgen kann. Eine derartige Ermittlung einer Fahrstrategie, die durch ein Längsführungssystem umgesetzt werden kann, ist beispielsweise in DE 10 2011 116 184 A1 beschrieben, wobei zur Umsetzung der Fahrstrategien dort verschiedene Informationen benutzt werden, die jedoch kein prädiziertes Beschleunigungspotential umfassen.

DE 10 2011 116 773 A1 betrifft ein Verfahren und eine Vorrichtung zur Längsregelung eines Fahrzeugs während des Betriebs des Fahrzeugs in einem halbautomatischen Fahrmodus, wobei ein abstandsbegrenzender Bremseingriff zur Aufrechterhaltung eines vorgebbaren Mindestabstandes zu einem vorausfahrenden Fahrzeug durchgeführt wird. Das dortige Verfahren soll sich besonders zur Anwendung in einem Elektrofahrzeug eignen, nachdem beispielsweise der Elektromotor beim Abbremsen auf einen Vordermann in einen Generatorbetrieb umgeschaltet werden kann.

DE 10 2008 015 567 A1 offenbart ein Verfahren zum Steuern des Betriebs eines Hybrid-Antriebsstrangs. Der Hybrid-Antriebsstrang umfasst dabei eine Brennkraftmaschine, eine Vorrichtung zum Speichern elektrischer Energie, einen Elektromotor und ein elektromechanisches Getriebe. Das Verfahren umfasst das Ermitteln eines optimalen Maschinenbetriebs und einer Maschinenfähigkeit sowie einer Bedienerdrehmomentanforderung ausgehend von fahrzeuginternen Parametern.

In DE 10 2013 110 346 A1 wird ein Verfahren zum Betreiben eines Antriebsstranges eines über zumindest eine elektrische Antriebsmaschine antreibbaren Fahrzeugs beschrieben. Dabei wird eine Prognose über die zukünftigen Temperaturen zumindest einer vorzugsweise elektrischen Komponente im Antriebsstrang erstellt, wobei der Antriebsstrang in Abhängigkeit der prognostizierten Temperaturen betrieben wird.

DE 10 2016 209 848 A1 beschreibt ein System und ein Verfahren für die Schätzung eines künftigen Leistungsvermögens einer Batterieanlage in einem Kraftfahrzeug. Das Leistungsvermögen einer Batterieanlage word prädiziert, indem der Ladezustand der Batterie vorausberechnet wird. Dazu wird ein projizierter Batteriestrom bestimmt, wenn die Batterieanlage an einer Spannungsgrenze arbeitet bzw. es wird eine projizierte Batteriespannung bestimmt, wenn die Batterieanlage an der Stromgrenze arbeitet.

DE 10 2016 123 648 A1 offenbart ein System, welches ein Soll-Beschleunigungsprofil zumindest teilweise basierend auf der maximalen Beschleunigungsfähigkeit eines Fahrzeuges bestimmt. Die maximale Beschleunigungsfähigkeit des Fahrzeugs wird dabei anhand eines aktuellen Zustands des Fahrzeugs ermittelt. Dabei wird ausgehend von einem Systemstatus des Fahrzeugs, in den aktuelle Fahrzeugparameter eingehen, ein vorhergesagtes maximales Raddrehmomentprofil ermittelt. Dabei beschreibt das maximale Raddrehmoment das maximale Drehmoment, das auf den Rädern von allen Antriebsvorrichtungen verfügbar ist. Dies kann unter Berücksichtigung eines vorübergehenden Raddrehmoments, welches aus einer Drehmomentbegrenzung resultiert, und/oder unter Berücksichtigung von Raddrehmomentbegrenzungsfaktoren, wie einem maximalen zulässigen Drehmoment, erfolgen.

Der Erfindung liegt die Aufgabe zugrunde, eine Möglichkeit zur situationsspezifischen Ermittlung eines zukünftigen Beschleunigungspotentials des Elektrokraftfahrzeugs, insbesondere zur Nutzung als Beschleunigungsinformation in Fahrerassistenzsystemen, anzugeben.

Zur Lösung dieser Aufgabe sind bei einem Verfahren der eingangs genannten Art erfindungsgemäß die Merkmale des Anspruchs 1 vorgesehen.

Erfindungsgemäß wurde erkannt, dass eine Vielzahl von Einflussfaktoren existieren, die das Beschleunigungspotential für einen zukünftigen, insbesondere unmittelbar bevorstehenden Zeitraum, beispielsweise eine bestimmte Anzahl von Sekunden in die Zukunft, beschreiben, zu denen aber in modernen Kraftfahrzeugen Informationen vorliegen oder ermittelt werden können. Beispielsweise kann die verfügbare Antriebsleistung (und somit die verfügbare Beschleunigungsleistung) durch verschiedene Bedingungen des Energiesystems beziehungsweise Umgebungsbedingungen eingeschränkt werden, ohne dass ein Fehlerzustand vorliegt. Beispiele für solche Bedingungen umfassen die Außentemperatur, den Ladezustand der Batterie, den Zustand der Leistungselektronik und dergleichen. Weitere Einflussfaktoren betreffen die Tatsache, dass aufgrund von veränderten Eigenschaften des Kraftfahrzeugs selbst, beispielsweise einer durch Zuladung geänderten Masse, sowie des vom Kraftfahrzeug befahrenen Streckenabschnitts Abweichungen von Nennwerten, insbesondere Einschränkungen, auftreten können, beispielsweise durch Steigungen, Kurven und/oder ein geändertes Reibverhalten. Erfindungsgemäß wird nun vorgeschlagen, diese Informationen - Leistungsprädiktion des Elektromotors, optional ein Fahrzeugmodell und prädiktive Streckendaten - zusammenzuführen, um eine genaue, situationsspezifische Berechnung eines zukünftigen Beschleunigungspotentials des Elektrokraftfahrzeugs zu ermöglichen.

Mit besonderem Vorteil kann die Beschleunigungsinformation zur Steuerung wenigstens eines Fahrerassistenzsystems, insbesondere eines Längsführungssystems, des Kraftfahrzeugs, insbesondere zur Ermittlung einer prädiktiven Betriebsstrategie des Fahrerassistenzsystems, verwendet werden. Die Beschleunigungsinformation erlaubt also eine verlässlichere Vorausschau und somit frühzeitige Anpassung von Betriebsstrategien beziehungsweise Betriebsparametern im Allgemeinen, um einen möglichst idealen, komfortorientierten und den Bedürfnissen des Fahrers entsprechenden Betrieb des jeweiligen Fahrerassistenzsystems zu erlauben. Hinsichtlich von ACC-Systemen als Längsführungssystemen kann beispielsweise eine Verzögerung und eine Beschleunigung des Kraftfahrzeugs im Hinblick auf vorausfahrende Verkehrsteilnehmer weiter optimiert werden, während es sowohl bei einem ACC-System also auch bei einer Geschwindigkeitsregelanlage zweckmäßig sein kann, zu überprüfen, ob eine eingestellte Regelgeschwindigkeit überhaupt erreicht werden kann. Erfindungsgemäß ist vorgesehen, anhand der Beschleunigungsinformation zu überprüfen, bis zu welchem Wert eine fahrerseitig einstellbare Setzgeschwindigkeit überhaupt angepasst werden kann. Das bedeutet, es können insbesondere nicht erreichbare Setzgeschwindigkeiten frühzeitig gesperrt werden, um nicht nachvollziehbares Verhalten des Längsführungssystems zu vermeiden. Die Informationen zum verfügbaren zukünftigen Beschleunigungspotential können ferner zum Erreichen einer möglichst energieeffizienten zukünftigen Fahrweise durch ein Fahrerassistenzsystem, insbesondere ein Längsführungssystem, ausgewertet werden.

Erfindungsgemäß wird hierbei ausgenutzt, dass Teilfunktionen, die der vorgeschlagenen Ermittlung einer prädiktiven Beschleunigungsinformation zugrunde liegen, im Stand der Technik bereits vorgeschlagen wurden beziehungsweise leicht realisiert/umgesetzt werden können. Das bedeutet, es wird eine neuartige Kombination von Informationen innerhalb des Kraftfahrzeugs vorgeschlagen, um die situationsangepasste, aktuelle prädizierte Beschleunigungsinformation zu ermitteln und entsprechenden Fahrzeugsystemen, insbesondere Fahrerassistenzsystemen bereitzustellen. Dabei werden insbesondere geeignete Modelle zugrunde gelegt, um die Abbildung der bereitstellbaren Beschleunigungsleistung im Elektromotor auf mögliche Geschwindigkeitsveränderungen nachzuvollziehen, wobei grundlegende, dem Fachmann grundsätzlich bekannte physikalische Gesamtzusammenhänge herangezogen werden können, insbesondere auch Wirkungsgrade beziehungsweise Verluste auf dem Weg vom Elektromotor zur Umsetzung einer Bewegung gegenüber dem befahrenen Streckenabschnitt.

Als Grundlage der Ermittlung der Beschleunigungsinformation wird hierbei eine Leistungsprädiktionsinformation des Elektromotors herangezogen, wobei entsprechende Vorgehensweisen, um ein Leistungspotential des Elektromotors zu prädizieren, im Stand der Technik bereits vorgeschlagen wurden und auch im Rahmen der vorliegenden Erfindung, gegebenenfalls verfeinert, eingesetzt werden können.

So kann vorgesehen sein, dass zur Ermittlung der Leistungsprädiktionsinformation wenigstens eine einen aktuellen Zustand der Batterie und/oder einen aktuellen Zustand einer der Batterie und/oder dem Elektromotor zugeordneten Leistungselektronik beschreibende Energieinformation und/oder eine die Betriebsbedingungen des Elektromotors und/oder der Batterie und/oder der Leistungselektronik beschreibende Umgebungsinformation verwendet wird. Hauptfaktoren, die insbesondere eine Leistungseinschränkung des Elektromotors mit sich bringen können, sind dabei Eigenschaften der Batterie und die Temperaturverhältnisse im Bereich des Elektromotors beziehungsweise des dem Elektromotor zugeordneten Energiesystems (Batterie und Leistungselektronik) nachdem die vorliegenden Temperaturen einen starken Einfluss auf die tatsächlich verfügbare Antriebsleistung und somit auch Beschleunigungsleistung haben. Mithin sieht eine zweckmäßige Weiterbildung der vorliegenden Erfindung vor, dass die Energieinformation einen Ladezustand der Batterie (SOC - State of Charge) und/oder einen Alterungszustand der Batterie und/oder die Umgebungsinformation wenigstens eine Temperatur, insbesondere eine Außentemperatur und/oder eine Batterietemperatur, umfasst und/oder ein durch die Energieinformation und/oder die Umgebungsinformation parametriertes Wirkungsgradmodell, dass die Umsetzung von in der Batterie gespeicherter elektrischer Energie in an dem Elektromotor abrufbare Antriebsleistung und somit Beschleunigungsleistung beschreibt, verwendet wird.

Dabei kann das Wirkungsgradmodell mit besonderem Vorteil ein Temperaturmodell umfassen, welches die Temperatureinflüsse auf das Energiesystem und den Elektromotor beschreibt und insbesondere auch hauptsächlich durch die Außentemperatur parametriert sein kann, nachdem stattfindende Erwärmungsprozesse im Energiesystem und im Elektromotor selbst auch modellhaft über die Zeit anhand des tatsächlich stattfindenden Betriebs abgebildet werden können.

Ergebnis ist eine Leistungsprädiktionsinformation hoher Qualität, die beispielsweise auch im allgemeinen für einen Zeitraum die jeweils verfügbare Antriebsleistung beschreiben kann und/oder angeben kann, für welche Zeitspanne, beispielsweise x Sekunden, eine momentan maximale Antriebsleistung gehalten werden kann.

Das Fahrzeugmodell beschreibt den für die Möglichkeit zur Beschleunigung relevanten Zustand des Kraftfahrzeugs. Dabei kann mit besonderem Vorteil ein wenigstens einen dynamischen und wenigstens einen statischen Fahrzeugparameter lieferndes Fahrzeugmodell verwendet werden. Wie es sich bereits aus den grundlegenden physikalischen Zusammenhängen ergibt, stellen bei der Umsetzung von Beschleunigungsleistung in eine Geschwindigkeitsänderung des Elektrokraftfahrzeugs an sich die Geschwindigkeit und die Masse des Elektrokraftfahrzeugs hauptsächliche, grundsätzlich veränderliche Einflussgrößen dar (die Fahrzeugmasse beispielsweise durch Zuladung). Mithin können als Fahrzeugparameter bevorzugt eine aktuelle Fahrzeugmasse und/oder eine aktuelle Massenverteilung und/oder eine aktuelle und/oder prädizierte Geschwindigkeit des Kraftfahrzeugs verwendet werden. Das Fahrzeugmodell kann insbesondere auch Wirkungsgrade umfassen, um eine Umrechnung der Antriebsleistung/Beschleunigungsleistung des Elektromotors in eine Radleistung zu ermöglichen.

Erfindungsgemäß werden eine eine Kurve beschreibende Krümmungsinformation für einen vorausliegenden Streckenabschnitt beschreibende prädiktive Streckendaten verwendet, wobei eine potentielle, die Längsgeschwindigkeit des Elektrokraftfahrzeugs erhöhende Längskomponente der Beschleunigung als Beschleunigungsinformation ermittelt wird. Vorzugsweise können zusätzlich eine Steigungsinformation für einen vorausliegenden Streckenabschnitt beschreibende prädiktive Streckendaten verwendet werden, wobei die potentielle, die Längsgeschwindigkeit des Kraftfahrzeugs erhöhende Längskomponente der Beschleunigung ermittelt wird, und/oder ein Radschlupf, insbesondere basierend auf einer Straßenzustandsinformation und/oder einer Reibwertinformation der prädiktiven Streckendaten, berücksichtigt werden. Beispielsweise wird bei Steigungen, die das Kraftfahrzeug nehmen muss, ein Teil der Beschleunigungsleistung zur Überwindung der Erstbeschleunigung verwendet, so dass nur ein anderer Anteil der tatsächlich an den Rädern bereitgestellten Beschleunigung des Kraftfahrzeugs zur Erhöhung der Geschwindigkeit dienen kann. Ferner wird in Kurven, beschrieben durch eine Krümmungsinformation, der Querbeschleunigungsanteil, der der Zentrifugalkraft entgegenwirkt, nicht zur Erhöhung der Geschwindigkeit bereitstehen. Krümmungsinformationen und Steigungsinformationen können mit besonderem Vorteil aus digitalen Kartendaten eines Navigationssystems abgerufen werden. Auch andere prädiktive Streckendaten können von dort erhalten werden, wobei als Quellen für prädiktive Streckendaten, wie im Stand der Technik grundsätzlich bekannt, auch Sensoren herangezogen werden können, beispielsweise eine auf das Vorfeld des Kraftfahrzeugs gerichtete Kamera und dergleichen.

Ein weiterer Einflussfaktor der berücksichtigt werden kann, ist der Radschlupf beziehungsweise Reibungsverlust, das bedeutet, Effekte bei der Umsetzung des Drehmoments des Rades relativ zum befahrenen Untergrund. Auch hier sind im Stand der Technik bereits entsprechende, auch im Rahmen der vorliegenden Erfindung einsetzbare Modelle bekannt. Diese können beispielsweise eine Straßenzustandsinformation und/oder eine Reibwertinformation, beispielsweise die Art des befahrenen Untergrunds und/oder Wetterbedingungen, mit einbeziehen.

In einer besonders vorteilhaften Weiterbildung der Erfindung kann vorgesehen sein, dass die prädiktiven Streckendaten einen prädiktiven Geschwindigkeitsverlauf des Kraftfahrzeugs umfassen und/oder ein prädiktiver Geschwindigkeitsverlauf des Kraftfahrzeugs aus den prädiktiven Streckendaten ermittelt wird, wobei die prädizierte Geschwindigkeit des Elektrokraftfahrzeugs zu einem Zeitpunkt des Zeitraums zur Ermittlung des Beschleunigungspotentials für diesen Zeitpunkt herangezogen wird. Die Bestimmung prädiktiver Geschwindigkeitsverläufe kann dabei insbesondere auch Betriebsdaten eines Fahrerassistenzsystems, insbesondere eines Längsführungssystems, oder dergleichen berücksichtigen, welches beispielsweise im Rahmen einer Betriebsstrategie einen Geschwindigkeitsverlauf des Kraftfahrzeugs bereits vorausgeplant hat. Weitere Quellen, die Hinweise auf einen zukünftigen Geschwindigkeitsverlauf des Kraftfahrzeugs geben, sind die prädiktiven Streckendaten selbst, welche beispielsweise auch Informationen zu erlaubten Höchstgeschwindigkeiten und/oder sonstigen, die Geschwindigkeit beeinflussenden Randbedingungen, beispielsweise starke Kurven, enthalten können. Bei der Ermittlung eines prädiktiven Geschwindigkeitsverlaufs können insbesondere auch Historiendaten herangezogen werden, die typische Geschwindigkeitsverläufe, wie sie ein Fahrer in der Vergangenheit umgesetzt hat, wiedergeben. Derartiges erlaubt es beispielsweise, prädiktive Beschleunigungsinformationen derart bereitzustellen, dass an einer vorausliegenden Position, an der sich die Höchstgeschwindigkeit ändert, überprüft werden kann, ob voraussichtlich auf die neue Höchstgeschwindigkeit beschleunigt werden kann, diese also als neue Setzgeschwindigkeit geeignet ist.

Dabei sei an dieser Stelle noch angemerkt, dass das Beschleunigungspotential beschreibende Beschleunigungsinformationen mögliche Beschleunigungsvorgänge gegebenenfalls selbst berücksichtigen können, insbesondere derart, dass beispielsweise für verschiedene Zeitpunkte des abgedeckten Zeitraums jeweils überprüft wird, bis auf welche Geschwindigkeit maximal beschleunigt werden könnte und dergleichen. Hierfür kann beispielsweise ein Vorausschauzeitraum zusätzlich zu dem Zeitraum festgelegt werden, in dem die maximale Beschleunigung evaluiert wird.

Grundsätzlich ist es zweckmäßig, wenn als Beschleunigungsinformation ein die maximal mögliche Beschleunigung über den Zeitraum beschreibender Beschleunigungsverlauf ermittelt wird. Eine maximal mögliche Beschleunigung kann durch Beschleunigungswerte an sich beschrieben werden, möglich ist es aber auch, wie bereits angedeutet wurde, beispielsweise eine zu einem Zeitpunkt durch Beschleunigungsmaßnahmen maximal erreichbare Maximalgeschwindigkeit zu bestimmen, was auf einen Vorausschauzeitraum beschränkt erfolgen kann, um lediglich asymptotisch erreichbare maximale Geschwindigkeiten auszuschließen. Die Beschleunigungsinformation kann auch für Zeitpunkte des Zeitraums angeben, wie lange maximal ein bestimmter Beschleunigungswert gehalten werden kann, insbesondere der zu diesem Zeitpunkt maximal mögliche Beschleunigungswert. Auf diese Weise kann die Beschleunigungsinformation letztlich auf die folgende Auswertung, insbesondere seitens eines Fahrerassistenzsystems, zugeschnitten geliefert werden. Zweckmäßig kann es ferner sein, wenn der Beschleunigungsinformation wenigstens eine Ursacheninformation für eine Abweichung von einem Nennbeschleunigungspotential zugeordnet wird. Bei der Berücksichtigung der verschiedenen Effekte bei der Berechnung der Beschleunigungsinformation kann mithin überwacht werden, welcher Effekt den größten Einfluss auf eine Einschränkung gegenüber einem Nennbeschleunigungspotential hat, so dass eine entsprechende Information kann, beispielsweise eine starke Steigung, eine zu hohe Temperatur des Elektromotors und/oder des Energiesystems und dergleichen.

Neben dem Verfahren betrifft die Erfindung auch ein Elektrokraftfahrzeug, aufweisend einen von einer Batterie gespeisten Elektromotor als Antriebseinrichtung und eine zur Durchführung eines erfindungsgemäßen Verfahrens ausgebildete Steuereinrichtung. Sämtliche Ausführungen bezüglich des erfindungsgemäßen Verfahrens lassen sich analog auf das erfindungsgemäße Elektrokraftfahrzeug übertragen, mit welchem mithin ebenso die bereits genannten Vorteile erhalten werden können. Insbesondere kann die Steuereinrichtung wenigstens ein Steuergerät des Elektrokraftfahrzeugs umfassen. Denkbar ist es beispielsweise, die Leistungsprädiktionsinformation seitens eines Energiemanagements-Steuergeräts und/oder eines Motorsteuergeräts des Elektromotors zu ermitteln, während beispielsweise ein weiteres Steuergerät, beispielsweise ein Steuergerät eines zentralen Fahrerassistenzsystems, die Leistungsprädiktionsinformation als Grundlage nutzt, um die Beschleunigungsinformation unter Berücksichtigung des Fahrzeugmodells und der prädiktiven Streckendaten zu ermitteln.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Elektrokraftfahrzeugs, und
- Fig. 2: eine Skizze zur Erläuterung des erfindungsgemäßen Verfahrens.

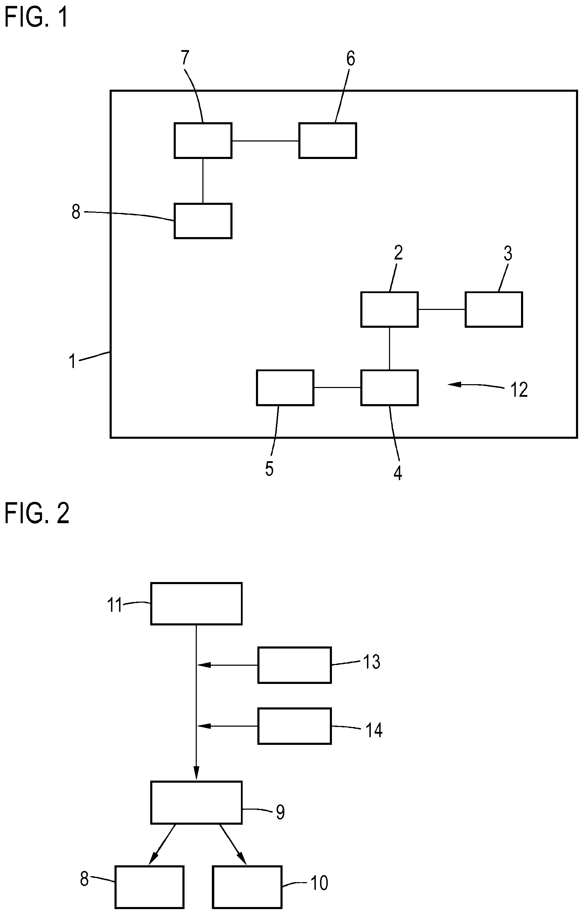

Fig. 1 zeigt eine Prinzipskizze eines erfindungsgemäßen Elektrokraftfahrzeugs 1, das als Antriebseinrichtung einen Elektromotor 2 aufweist, dessen Antriebsleistung und somit gegebenenfalls auch Beschleunigungsleistung über einen hier nur angedeuteten restlichen Antriebsstrang 3 an die nicht näher gezeigten Räder des Kraftfahrzeugs 1 übertragen werden kann. Unter Verwendung entsprechender Leistungselektronik 4 wird der Elektromotor 2 aus einer Hochspannungs-Batterie 5 gespeist.

Das Kraftfahrzeug 1 weist ferner eine Steuereinrichtung 6 auf, die zur Durchführung des erfindungsgemäßen Verfahrens ausgebildet ist und wenigstens ein Steuergerät umfassen kann, insbesondere ein Energiemanagementsteuergerät und/oder Motorsteuergerät und/oder ein Steuergerät eines zentralen Fahrerassistenzsystems. Die Steuereinrichtung 6 kommuniziert mit weiteren Fahrzeugsystemen, von denen hier nur rein beispielhaft ein Navigationssystem 7 und ein Fahrerassistenzsystem 8 gezeigt sind, welches als Längsführungssystem, insbesondere ACC-System oder Geschwindigkeitsregelanlage, ausgebildet ist.

Fig. 2 ist eine Prinzipskizze zur Durchführung des erfindungsgemäßen Verfahrens, welches dazu dient, eine prädiktive Beschleunigungsinformation 9 zu ermitteln, die dem Fahrerassistenzsystem 8 sowie gegebenenfalls weiteren Fahrzeugsystemen 10, insbesondere weiteren Fahrerassistenzsystemen, bereitgestellt werden kann. Dabei wird ausgegangen von einer Leistungsprädiktionsinformation 11, die eine prädizierte verfügbare Beschleunigungsleistung des Elektromotors 2 für einen zukünftigen Zeitraum beschreibt, beispielsweise für mehrere Sekunden in die Zukunft. Zur Ermittlung der Leistungsprädiktionsinformation wird letztlich überprüft, ob die maximal denkbare bereitstellbare Beschleunigungsleistung des Elektromotors 2 durch Zustände des Energiesystems 12 (Fig. 1) selber oder der Umgebung eingeschränkt sein könnte. Hierzu wird der aktuelle Zustand der Batterie 5, insbesondere deren Ladezustand, genauso beachtet wie eine Außentemperatur, die Kühlbedingungen und dergleichen beschreibt und in ein Temperaturmodell, welches die Erwärmung der Komponenten des Energiesystems 12 und des Elektromotors 2 beschreibt, eingehen kann, welches entsprechende Temperaturen anhand des Betriebs der einzelnen Komponenten nachverfolgt. Das Temperaturmodell ist Teil eines allgemeinen Wirkungsgradmodells, welches die Umsetzung elektrischer Energie der Batterie 5 in Antriebsleistung und somit auch Beschleunigungsleistung am Elektromotor 2 beschreibt.

Diese Leistungsprädiktionsinformation 11, die beispielsweise für verschiedene Zeitpunkte des Zeitraums beschreiben kann, welche maximale Beschleunigungsleistung für welche Zeitspanne bereitgestellt werden kann, kann nun grundsätzlich zunächst in eine Radleistung an den Rädern des Elektrokraftfahrzeugs 1 umgerechnet werden, wenn die aktuellen Eigenschaften des Antriebsstrangs 3 bekannt sind, was durch ein weiteres Wirkungsgradmodell abgebildet werden kann. Diese Radleistung wird, unter Berücksichtigung von Radschlupf beziehungsweise Reibungsverlusten, relativ zum befahrenen Untergrund umgesetzt.

Beschleunigungsleistung des Elektromotors 2 resultiert dabei in einer Geschwindigkeitsänderung des Elektrokraftfahrzeugs 1, welche sich nach physikalischen Grundsätzen ergibt. Hierbei wird zum einen das die Fahrzeuggeschwindigkeit als dynamischen Fahrzeugparameter und die Fahrzeugmasse als statischen Fahrzeugparameter enthaltende Fahrzeugmodell 13 eingesetzt, wobei selbstverständlich bei einer genaueren Umsetzung und Modellierung auch weitere Fahrzeugeigenschaften Berücksichtigung finden können. Ferner werden, um die Beschleunigungsinformation 9 ermitteln zu können, prädiktive Streckendaten 14, die insbesondere wenigstens vom Navigationssystem 7 erhalten werden, eingesetzt, und die beispielsweise eine Steigungsinformation und eine Krümmungsinformation für den vorausliegenden Streckenabschnitt enthalten. Auch die Steigung und die Krümmung sind wesentlich für eine mögliche Beschleunigung des Elektrokraftfahrzeugs 1, da unter deren Kenntnis Komponenten, die der Kompensation der Erdbeschleunigung und der Zentrifugalkraft dienen, herausgerechnet werden können.

Im vorliegenden Ausführungsbeispiel wird die Beschleunigungsinformation 9 als zu verschiedenen Zeitpunkten während des Zeitraums mögliche Beschleunigungen ausgehend von einem prädiktiven Geschwindigkeitsverlauf bestimmt. Das bedeutet, für jeden zu untersuchenden Zeitpunkt innerhalb des Zeitraums, für den die Beschleunigungsinformation prädiziert werden soll, ist eine prädiktive Geschwindigkeit des Kraftfahrzeugs 1 bekannt und es lässt sich aus den gezeigten Informationen, insbesondere der Leistungsprädiktionsinformation 11, dem Fahrzeugmodell 13 und den prädiktiven Streckendaten 14, eine maximal mögliche Beschleunigung zu diesem Zeitpunkt genau wie deren maximale Dauer ermitteln, was fortgeführt werden kann, bis eine maximal erreichbare Geschwindigkeit des Elektrokraftfahrzeugs 1 vorliegt, die ebenso als Teil der Beschleunigungsinformation 9 vorgesehen werden kann, aber auch im Fahrerassistenzsystem 8, beispielsweise zum Sperren bestimmter Setzgeschwindigkeiten, ermittelt werden kann. Auch sonstige beziehungsweise weitere Angaben sind als prädiktive Beschleunigungsinformation 9 beziehungsweise Teil davon denkbar, die die maximal mögliche Beschleunigung des Elektrokraftfahrzeugs 1 beschreiben, beispielsweise als ein Beschleunigungsverlauf über den zu prädizierenden Zeitraum.

Entsprechende Beschleunigungsinformationen 9 können im Fahrerassistenzsystem 8 beziehungsweise weiteren Fahrzeugsystemen 10 zur Wahl geeigneter Betriebsstrategien, insbesondere auch hinsichtlich der Energieverbrauchsminimierung und/oder einer vorhersagbaren, komfortablen Nutzung der Fahrerassistenz, ausgewertet werden.

## Patentansprüche

1. Verfahren zur Ermittlung einer prädizierten Beschleunigungsinformation (9), die ein zukünftiges Beschleunigungspotential eines Elektrokraftfahrzeugs (1) mit einem von einer Batterie (5) gespeisten Elektromotor (2) als Antriebseinrichtung beschreibt, in dem Elektrokraftfahrzeug (1), umfassend folgende Schritte:
- Bereitstellen einer Leistungsprädiktionsinformation (11) des Elektromotors (2), die eine prädizierte verfügbare Beschleunigungsleistung des Elektromotors (2) für wenigstens einen zukünftigen Zeitraum beschreibt,
- Ermittlung der Beschleunigungsinformation (9) aus der Leistungsprädiktionsinformation (11) unter Verwendung von von einem Navigationssystem (7) bereitgestellten prädiktiven Streckendaten (14) für den Zeitraum, wobei eine eine Kurve beschreibende Krümmungsinformation für einen vorausliegenden Streckenabschnitt beschreibende prädiktive Streckendaten (14) verwendet werden, wobei eine potentielle, die Längsgeschwindigkeit des Elektrokraftfahrzeugs (1) erhöhende Längskomponente der Beschleunigung als Beschleunigungsinformation (9) ermittelt wird,
**dadurch gekennzeichnet,**
**dass** anhand der ermittelten Beschleunigungsinformation (9) von einem Fahrerassistenzsystem (8), das ein ACC-System oder eine Geschwindigkeitsregelanlage ist, überprüft wird, bis zu welchem Wert eine fahrerseitig einstellbare Setzgeschwindigkeit erreicht werden kann, wobei nicht erreichbare Setzgeschwindigkeiten frühzeitig gesperrt werden.

2. Verfahren nach Anspruch 1,
**dadurch gekennzeichnet,**
**dass** zur Ermittlung der Leistungsprädiktionsinformation (11) wenigstens eine einen aktuellen Zustand der Batterie (5) und/oder einen aktuellen Zustand einer der Batterie (5) und/oder dem Elektromotor (2) zugeordneten Leistungselektronik (4) beschreibende Energieinformation und/oder eine die Betriebsbedingungen des Elektromotors (2) und/oder der Batterie (5) und/oder der Leistungselektronik (4) beschreibende Umgebungsinformation verwendet wird.

3. Verfahren nach Anspruch 2,
**dadurch gekennzeichnet,**
**dass** die Energieinformation einen Ladezustand der Batterie (5) und/oder einen Alterungszustand der Batterie (5) und/oder die Umgebungsinformation wenigstens eine Temperatur, insbesondere eine Außentemperatur und/oder eine Batterietemperatur, umfasst und/oder ein durch die Energieinformation und/oder die Umgebungsinformation parametriertes Wirkungsgradmodell, dass die Umsetzung von in der Batterie (5) gespeicherter elektrischer Energie in an dem Elektromotor (2) abrufbare Beschleunigungsleistung beschreibt, verwendet wird.

4. Verfahren nach einem der vorangehenden Ansprüche,
**dadurch gekennzeichnet,**
**dass** die Beschleunigungsinformation (9) zusätzlich unter Verwendung eines den aktuellen Betriebszustand des Elektrokraftfahrzeugs (1) beschreibenden, wenigstens einen die aufgrund der Beschleunigungsleistung mögliche Beschleunigung beschreibenden Fahrzeugparameter liefernden Fahrzeugmodells (13) ermittelt wird.

5. Verfahren nach Anspruch 4,
**dadurch gekennzeichnet,**
**dass** ein wenigstens einen dynamischen und wenigstens einen statischen Fahrzeugparameter lieferndes Fahrzeugmodell (13) verwendet wird.

6. Verfahren nach Anspruch 5,
**dadurch gekennzeichnet,**
**dass** als Fahrzeugparameter eine aktuelle Fahrzeugmasse und/oder eine aktuelle Massenverteilung und/oder eine aktuelle und/oder prädizierte Geschwindigkeit des Elektrokraftfahrzeugs (1) verwendet wird.

7. Verfahren nach einem der vorangehenden Ansprüche,
**dadurch gekennzeichnet,**
**dass** eine Steigungsinformation für einen vorausliegenden Streckenabschnitt beschreibende prädiktive Streckendaten (14) verwendet werden und/oder ein Radschlupf, insbesondere basierend auf einer Straßenzustandsinformation und/oder einer Reibwertinformation der prädiktiven Streckendaten (14), berücksichtigt wird.

8. Verfahren nach einem der vorangehenden Ansprüche,
**dadurch gekennzeichnet,**
**dass** die prädiktiven Streckendaten (14) einen prädiktiven Geschwindigkeitsverlauf des Elektrokraftfahrzeugs (1) umfassen und/oder ein prädiktiver Geschwindigkeitsverlauf des Elektrokraftfahrzeugs (1) aus den prädiktiven Streckendaten (14) ermittelt wird, wobei die prädizierte Geschwindigkeit des Elektrokraftfahrzeugs (1) zu einem Zeitpunkt des Zeitraums zur Ermittlung des Beschleunigungspotentials für diesen Zeitpunkt herangezogen wird.

9. Verfahren nach einem der vorangehenden Ansprüche,
**dadurch gekennzeichnet,**
**dass** als Beschleunigungsinformation (9) ein die maximal mögliche Beschleunigung über den Zeitraum beschreibender Beschleunigungsverlauf ermittelt wird und/oder der Beschleunigungsinformation (9) wenigstens eine Ursacheninformation für eine Abweichung von einem Nennbeschleunigungspotential zugeordnet wird.

10. Elektrokraftfahrzeug (1), aufweisend einen von einer Batterie (5) gespeisten Elektromotor (2) als Antriebseinrichtung und eine zur Durchführung eines Verfahrens nach einem der vorangehenden Ansprüche ausgebildete Steuereinrichtung (6).

## Claims

1. Method for determining an item of predicted acceleration information (9) which describes a future acceleration potential of an electric motor vehicle (1) having an electric motor (2) fed by a battery (5) as a drive apparatus, in the electric motor vehicle (1), comprising the following steps:
- providing an item of power prediction information (11) about the electric motor (2) which describes a predicted available acceleration power of the electric motor (2) for at least one future time period,
- determining the item of acceleration information (9) from the item of power prediction information (11) using predictive route data (14) supplied by a navigation system (7) for the time period, wherein predictive route data (14) describing a curve for a route section ahead are used, wherein a potential longitudinal component of the acceleration increasing the longitudinal speed of the electric power vehicle (1) is determined as the item of acceleration information (9),
**characterised in that**
a driver assistance system (8), which is an ACC system or a cruise control system, uses the item of determined acceleration information (9) to check up to which value a setting speed which can be set by the driver is achievable, wherein setting speeds which are unachievable are blocked at an early stage.

2. Method according to claim 1,
**characterised in that**
at least one item of energy information describing a current state of the battery (5) and/or a current state of a power electronics unit (4) associated with the battery (5) and/or with the electric motor (2) and/or one item of environmental information describing the operating conditions of the electric motor (2) and/or of the battery (5) and/or of the power electronics unit (4) is used to determine the item of power prediction information (11).

3. Method according to claim 2,
**characterised in that**
the item of energy information comprises a state of charge of the battery (5) and/or an ageing state of the battery (5) and/or the item of environmental information comprises at least one temperature, in particular an outside temperature and/or a battery temperature, and/or an efficiency model parameterised by the item of energy information and/or the item of environmental information, which efficiency model describes the conversion of electrical energy stored in the battery (5) into acceleration power which can be retrieved at the electric motor (2), is used.

4. Method according to any of the preceding claims,
**characterised in that**
the item of acceleration information (9) is additionally determined using a vehicle model (13) which describes the current operating state of the electric motor vehicle (1) and which provides at least one vehicle parameter describing the acceleration possible on the basis of the acceleration power.

5. Method according to claim 4,
**characterised in that**
a vehicle model (13) providing at least one dynamic and at least one static vehicle parameter is used.

6. Method according to claim 5,
**characterised in that**
a current vehicle mass and/or a current mass distribution and/or a current and/or predicted speed of the electric motor vehicle (1) is used as the vehicle parameter.

7. Method according to any of the preceding claims,
**characterised in that**
predictive route data (14) describing an item of gradient information for a route section ahead are used and/or wheel slip is taken into account, in particular based on an item of road condition information and/or an item of friction value information in the predictive route data (14).

8. Method according to any of the preceding claims,
**characterised in that**
the predictive route data (14) comprise a predictive speed profile of the electric motor vehicle (1) and/or a predictive speed profile of the electric motor vehicle (1) is determined from the predictive route data (14), wherein the predicted speed of the electric motor vehicle (1) at a point in time within the time period is used to determine the acceleration potential for this point in time.

9. Method according to any of the preceding claims,
**characterised in that**
an acceleration profile describing the maximum possible acceleration over the time period is determined as the item of acceleration information (9) and/or at least one item of information on the cause of a deviation from a nominal acceleration potential is associated with the item of acceleration information (9).

10. Electric motor vehicle (1), having an electric motor (2) fed by a battery (5) as a drive apparatus and a control apparatus (6) designed to perform a method according to any of the preceding claims.

## Revendications

1. Procédé de détermination d'une information d'accélération prévue (9) qui décrit un potentiel d'accélération futur d'un véhicule automobile électrique (1) avec un moteur électrique (2) alimenté par une batterie (5) comme appareil de propulsion, dans le véhicule automobile électrique (1), comprenant les étapes suivantes :
- la fourniture d'une information de prédiction de puissance (11) du moteur électrique (2) qui décrit une puissance d'accélération disponible prévue du moteur électrique (2) pour au moins une période future,
- la détermination de l'information d'accélération (9) à partir de l'information de prédiction de puissance (11) en utilisant des données de trajet (14) prédictives fournies par un système de navigation (7) pour la période, dans lequel des données de trajet (14) prédictives décrivant une information de courbure décrivant une courbe pour une section de trajet précédente sont utilisées, dans lequel une composante longitudinale potentielle de l'accélération augmentant la vitesse longitudinale du véhicule automobile électrique (1) est déterminée comme information d'accélération (9),
**caractérisé en ce que**
à l'aide de l'information d'accélération (9) déterminée, il est vérifié par un système d'assistance au conducteur (8) qui est un système ACC ou une installation de régulation de vitesse jusqu'à quelle valeur une vitesse de réglage réglable côté conducteur peut être atteinte, dans lequel des vitesses de réglage non atteignables sont bloquées précocement.

2. Procédé selon la revendication 1,
**caractérisé en ce que**
au moins une information d'énergie décrivant un état actuel de la batterie (5) et/ou un état actuel d'une électronique de puissance (4) associée à la batterie (5) et/ou au moteur électrique (2) et/ou une information d'environnement décrivant les conditions de fonctionnement du moteur électrique (2) et/ou de la batterie (5) et/ou de l'électronique de puissance (4) est utilisée pour la détermination de l'information de prédiction de puissance (11).

3. Procédé selon la revendication 2,
**caractérisé en ce que**
l'information d'énergie comporte un état de charge de la batterie (5) et/ou un état de vieillissement de la batterie (5) et/ou l'information d'environnement comporte au moins une température, en particulier une température extérieure et/ou une température de batterie et/ou un modèle de rendement paramétré par l'information d'énergie et/ou l'information d'environnement que décrit la conversion d'énergie électrique stockée dans la batterie (5) en puissance d'accélération appelable au niveau du moteur électrique (2), est utilisée.

4. Procédé selon l'une quelconque des revendications précédentes,
**caractérisé en ce que**
l'information d'accélération (9) est en outre déterminée en utilisant un modèle de véhicule (13) décrivant l'état de fonctionnement actuel du véhicule automobile électrique (1), fournissant au moins un paramètre de véhicule décrivant la possible accélération sur la base de la puissance d'accélération.

5. Procédé selon la revendication 4,
**caractérisé en ce que**
un modèle de véhicule (13) fournissant au moins un paramètre de véhicule dynamique et au moins un paramètre de véhicule statique est utilisé.

6. Procédé selon la revendication 5,
**caractérisé en ce que**
une masse de véhicule actuelle et/ou une distribution de masse actuelle et/ou une vitesse actuelle et/ou prédite du véhicule automobile électrique (1) est utilisée comme paramètre de véhicule.

7. Procédé selon l'une quelconque des revendications précédentes,
**caractérisé en ce que**
une information de pente pour des données de trajet (14) prédictives décrivant une section de trajet précédente est utilisée et/ou un patinage est pris en considération, en particulier sur la base d'une information d'état de la route et/ou d'une information de coefficient de friction des données de trajet (14) prédictives.

8. Procédé selon l'une quelconque des revendications précédentes,
**caractérisé en ce que**
les données de trajet (14) prédictives comportent une courbe de vitesse prédictive du véhicule automobile électrique (1) et/ou une courbe de vitesse prédictive du véhicule automobile électrique (1) est déterminée à partir des données de trajet (14) prédictives, dans lequel la vitesse prédite du véhicule automobile électrique (1) est utilisée à un moment de la période pour la détermination du potentiel d'accélération pour ce moment.

9. Procédé selon l'une quelconque des revendications précédentes,
**caractérisé en ce que**
une courbe d'accélération décrivant l'accélération possible maximale sur la période est déterminée comme information d'accélération (9) et/ou à l'information d'accélération (9) est associée au moins une information sur la cause d'un écart par rapport à un potentiel d'accélération nominal.

10. Véhicule automobile électrique (1) présentant un moteur électrique (2) alimenté par une batterie (5) comme appareil de propulsion et un appareil de commande (6) conçu pour la réalisation d'un procédé selon l'une quelconque des revendications précédentes.
